# EUROPEAN PATENT SPECIFICATION

(11) **EP 3 295 618 B1**
(45) Date of publication and mention of the grant of the patent: **17.04.2019**
(21) Application number: 15724208.2
(22) Date of filing: 15.05.2015
(51) Int. Cl.: H04L 12/707, H04L 12/703

(54) **ROUTING IN A MULTI-PATH NETWORK**
ROUTEN IN EINEM MEHRWEGNETZ
ROUTAGE DANS UN RÉSEAU À TRAJETS MULTIPLES

(43) Date of publication of application: 21.03.2018
(73) Proprietor: Telefonaktiebolaget LM Ericsson (publ), 164 83 Stockholm (SE)
(72) Inventor: DIMITRIADIS, Gerasimos, GR-54248 Thessaloniki (GR); ESSIGMANN, Kurt, 52072 Aachen (DE); VLACHOPOULOS, Kostas, S-16483 Stockholm (SE)
(74) Representative: Brann AB
(86) International application number: PCT/EP2015/060758
(87) International publication number: WO 2016/184480

(56) References cited:
- EP-A1- 2 198 587
- EP-A1- 2 701 349
- V. Fajardo ET AL: "RFC 6733 - Diameter Base Protocol", , 30 December 2012 (2012-12-30), pages 1-152, XP055239051, Retrieved from the Internet: URL:https://tools.ietf.org/html/rfc6733 [retrieved on 2016-01-06]

## Description

### Technical Field

Various embodiments relate to sending messages directed towards at least one target node in a multi-path network. In particular, various embodiments relate to adding, to a routing record of a message, a value indicative of an originator of an answer message.

### Background

Signaling networks are known where multiple routing paths exists between endpoints (multi-path network). E.g., a message directed to a given endpoint, sometimes also referred to as target node, may be forwarded by one or more forwarding nodes of the network along links of the network until it eventually reaches the given endpoint; where the message is forwarded by a plurality of forwarding nodes, the signaling network is sometimes also referred to as multi-hop network. Each one of the one or more forwarding nodes typically takes a routing decision and, based on the outcome of the routing decision, sends the message to a direct communication peer node (hop); the direct communication peer node is the egress node with respect to the message. One example of such a network is a network that operates based on the Diameter protocol as specified by the Internet Engineering Task Force (IETF) Request For Comments (RFC) 6733 of October 2012. A forwarding node which implements the Diameter protocol is sometimes also referred to as a Diameter Agent (DA).

DAs provide routing services in signaling networks that employ the Diameter protocol in the application layer. Maintaining Diameter connections to endpoint nodes as well as other agents, DAs aggregate messages and forward them to the appropriate direct communication peers. The routing decisions are made by evaluating information extracted from the messages against entries of routing tables configured in the DA.

According to the Diameter protocol, each DA in a network typically possesses routing-related knowledge regarding its immediate surroundings only, i.e., is aware of the local topology of the network only. Apart from the connections to its immediate neighboring direct communication peers, a DA is typically not aware of the topology of the full network. This localized knowledge can cause redundant rerouting of messages in the attempt to deliver a message in cases of node failure and / or link failure (failure condition): because at least partially overlapping routing paths are employed that all cannot successfully handle the message due to the failure condition, executing the multiple delivery attempts, from a global topology perspective, is unnecessary. The total probability of successful delivery is typically not significantly increased by the rerouting attempts.

Doing multiple delivery attempts over partially overlapping routing paths in the presence of a failure condition has certain specific drawbacks. Specifically, the negative effects on the network may be:
Increased signaling load: The signaling multiplication effect that is caused by the delivery reattempts and the corresponding protocol error answers encumber the links between the nodes with superfluous traffic. This can affect healthy traffic that is served over the same links by negatively impacting the quality of service provided. This can range from a moderate increase in delivery latency, down to rejected / dropped traffic, because the links are saturated.

Increased consumption of DA resources: Since the DAs are processing more messages per unit of time, there is a corresponding increase in the resources of the DA consumed, e.g., resources in terms of memory and processing time. The effect of this can range from increased energy consumption, down to denial of service to otherwise healthy traffic because the DA is overloaded.

Increased response times: The rerouting attempts over multiple routing paths typically do not increase the delivery probability as explained above, yet they add a non-negligible delay before the DA that originally offered the request is served the negative answer back.

EP 2 701 349 A1 discloses a method and an apparatus for managing Diameter routing, which relate to the field of communication technology and are invented for the purpose of effectively avoiding frequently sending a Diameter message on a faulty routing. The method for managing Diameter routing comprises: receiving, by a network apparatus, a first Diameter message that needs to be delivered to a destination node; determining, by the network apparatus, a routing status of a primary routing from the network apparatus to the destination node, according to recorded routing status from the network apparatus to the destination node; sending, by the network apparatus, the first Diameter message through the primary routing, if the routing status of the primary routing is normal; sending, by the network apparatus, the first Diameter message through an alternative routing from the network apparatus to the destination node, if the routing status of the primary routing is faulty.

WO 2009/039890 A1 discloses a method for facilitating recovery from the failure of a Serving Call Session Control Function (S-CSCF) within an IP Multimedia Subsystem (IMS) network. The method comprises receiving at a Proxy Call Session Control Function (P-CSCF) a SIP request sent by a User Equipment (UE) possessing an identity previously registered with the IMS network and for which a given S-CSCF was selected. At said P-CSCF it is determined if said given S-CSCF has failed or is otherwise unreachable. If the S-CSCF has failed or is otherwise unreachable, a reregistration message is sent from the P-CSCF to said UE, receipt of said reregistration message at the UE forcing the UE to perform an IMS registration procedure with the IMS network.

### Summary

Therefore, a need exists for advanced techniques of a routing in a multi-path network.
This need is met by the features of the independent claims. The dependent claims define embodiments.

According to an aspect, a method is provided. The method comprises a node of a multi-path network sending a first message to a first egress node. The first message is directed towards at least one target node. The method further comprises the node receiving an answer message after said sending. The answer message includes an originator attribute having a value indicative of an identity of an originator node of the answer message. The method further comprises adding, to a routing record of a second message, a value indicative of the identity of the originator node of the answer message. The method further comprises the node sending the second message to a second egress node. The second message is directed towards the at least one target node.

According to a further aspect, a node that is attachable to a multi-path network is provided. The node comprises an interface. The interface is configured to communicate with a first egress node and the second egress node. The node further comprises at least one processor. The at least one processor is configured to send a first message via the interface into the first egress node. The first message is directed towards at least one target node. The at least one processor is further configured to receive an answer message via the interface. The answer message includes an originator attribute having a value indicative of an identity of an originator node of the answer message. The at least one processor is further configured to add, to a routing record of a second message, a value indicative of the identity of the originator node of the answer message. The at least one processor is further configured to send, via the interface to the second egress node, the second message. The second message is directed towards the at least one target node.

According to a further aspect, a computer program product comprising program code to be executed by at least one processor of a node of a multi-path network is provided. Execution of the program code causes the at least one processor to execute a method comprising: sending a first message to a first egress node, wherein the first message is directed towards at least one target node; and after said sending, receiving an answer message including an originator attribute having a value indicative of an identity of an originator node of the answer message; and adding, to a routing record of a second message, a value indicative of the identity of the originator node of the answer message; and sending to a second egress node, the second message, wherein the second message is directed towards the at least one target node.

According to an embodiment, a method is provided. The method comprises a node of a multi-path network sending a first message to a first egress node. The first message is directed towards at least one target node. The method further comprises the node receiving an answer message after said sending. The answer message includes an originator attribute having a value indicative of an identity of an originator node of the answer message. The method further comprises adding, to a routing record of a second message, a value indicative of the identity of the first egress node. The method further comprises the node sending the second message to a second egress node. The second message is directed towards the at least one target node.

According to a further embodiment, a node that is attachable to a multi-path network is provided. The node comprises an interface. The interface is configured to communicate with a first egress node and the second egress node. The node further comprises at least one processor. The at least one processor is configured to send a first message via the interface into the first egress node. The first message is directed towards at least one target node. The at least one processor is further configured to receive an answer message via the interface. The answer message includes an originator attribute having a value indicative of an identity of an originator node of the answer message. The at least one processor is further configured to add, to a routing record of a second message, a value indicative of the identity of the first egress node. The at least one processor is further configured to send, via the interface to the second egress node, the second message. The second message is directed towards the at least one target node.

According to a further embodiment, a computer program product comprising program code to be executed by at least one processor of a node of a multi-path network is provided. Execution of the program code causes the at least one processor to execute a method comprising: sending a first message to a first egress node, wherein the first message is directed towards at least one target node; and after said sending, receiving an answer message including an originator attribute having a value indicative of an identity of an originator node of the answer message; and adding, to a routing record of a second message, a value indicative of the identity of the first egress node node; and sending to a second egress node, the second message, wherein the second message is directed towards the at least one target node.

It is to be understood that the features mentioned above and features yet to be explained below can be used not only in the respective combinations indicated, but also in other combinations or in isolation, without departing from the scope of the present invention. Features of the above-mentioned aspects and embodiments may be combined with each other in other embodiments.

### Brief Description of the Drawings

The foregoing and additional features and effects of the invention will become apparent from the following detailed description when read in conjunction with the accompanying drawings, in which like reference numerals refer to like elements.
FIG. 1 schematically illustrates a multi-path network having a redundant network topology.
FIG. 2 schematically illustrates the multi-path network of FIG. 1 during the presence of a failure condition of the network.
FIG. 3 is a signaling diagram illustrating routing of messages in the network of FIG. 2 according to reference implementations.
FIG. 4 is a signaling diagram illustrating routing of messages in the network of FIG. 2 according to various embodiments.
FIG. 5 schematically illustrates a multi-path network having a redundant network topology during the presence of a failure condition of the network.
FIG. 6 schematically illustrates a request message.
FIG. 7 schematically illustrates an answer message.
FIG. 8 schematically illustrates a request message.
FIG. 9 schematically illustrates a multi-path network having a redundant network topology during the presence of a failure condition of the network.
FIG. 10 schematically illustrates a node of a network.
FIG. 11 is a flowchart of a method according to various embodiments.

### Detailed Description of Embodiments

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Hereinafter, various aspects of routing in multi-path networks are described with reference to the drawings. Hereinafter, techniques are explained which enable lean and efficient routing. These techniques rely on employing knowledge obtained from a transmission or from a transmission attempt of a first message for the subsequent routing of a second message. Thus, the techniques may facilitate smart routing. While the first message is sent to a first egress node, the second message may be sent to a second egress node that is different to the first egress node.

Sometimes, the first message may correspond to the second message: various embodiments relate to techniques which implement smart routing in the presence of a failure condition of the network. In particular, hereinafter techniques are described which enable to reduce a frequency of occurrence of unnecessary rerouting attempts of an undeliverable message due to at least partially overlapping routing paths that cannot reach a target node. Here, the knowledge on a first vain routing attempt of the message is employed for controlling a second routing attempt of the message.

Beyond said techniques which focus on avoidance of vain re-routing in the presence of a failure condition of the network, the knowledge obtained from the transmission of the first message may correspond to other information such as, e.g., certain applications provided by nodes, a congestion level of nodes, operation properties of nodes, etc. In particular in such scenarios, the subsequently routed second message may differ at least partly from the first message. Here, a failure condition may be present or may not be present.

The techniques described herein may be applied to routing of a message between endpoint nodes. Typically, the endpoint node creating the message is referred to as an originator node of the message. Typically, the endpoint node to which the message is directed to is referred to as the target node of the message. The sequence of nodes and links that the message takes through the network on its way towards the target node is typically referred to as routing path. The nodes of the network situated along the routing path that receive and send on the message are sometimes referred to as forwarding nodes. The forwarding nodes are typically situated along the routing path in between the originator node and the target node of the message.

Sometimes, the routing path may be predefined by the source node, the originator node, or generally a control entity. Sometimes, the forwarding nodes may take so-called routing decisions which depend on various parameters including local parameters of the forwarding node; then, the routing path may not be predefined or only be predefined to a limited extent.

It is possible that the nodes of the network keep track of the routing of the message on its way through the network along the routing path. E.g., it is possible that each forwarding node adds a value indicative of its identity and / or the identity of a direct communication peer also forwarding the message to a so-called routing record of the message. E.g. the identity of the ingress node from which the message has been received may be tracked; alternatively or additionally, the identity of the egress node to which the message is sent may be tracked. Thus, the routing record may be a table that includes all or some of the identities of forwarding nodes that have previously forwarded the respective message.

The techniques described hereinafter may be readily applied to all kinds of messages to be routed towards a target node. One example of messages which may be routed based on techniques described herein are so-called request messages. Request messages typically request execution of a certain event at the target node. E.g., request messages can request the execution of a specific command indicated by the request message at the target node. It is also possible that the request message requests certain kind of information. E.g., the request message may request user-specific information or information required by a requesting node to execute a certain application. Typically, the target node, in response to successfully receiving the request message, sends an answer message directed to the originator of the request message, the answer message including specific information in the context of the request message. The answer message may thus refer to the request message.

Generally, a message routed in a multi-path network, e.g., a request message, may be directed to a single target node or a plurality of target nodes. Sometimes, the plurality of target nodes to which a message is directed may be grouped in a domain which may be referred to as routing realm. Such a grouping may be for administrative purposes. A subset of the nodes in a realm or even a single node can be eventually eligible for processing the message; internal forwarding within the routing realm can be employed in this regard. Typically, a target node may be a server. The server may comprise logic functionality beyond routing functionality. E.g., the server may comprise a database in which data is stored; the data may be accessed in response to receiving a request message. E.g., the server may execute one or more applications.

Generally, the techniques may be implemented for different kinds of signaling networks; e.g., the networks may rely on wired and / or wireless links. Hereinafter, the details of the routing techniques are explained with reference to a multi-path network operating based on the Diameter protocol for illustrative purposes only. Generally, it is possible to employ the techniques described herein for various signaling protocols. The techniques described herein are not limited to routing based on the Diameter protocol.

When a Diameter request message arrives at a DA for relaying, a number of Attribute Value Pairs (AVPs) are extracted from it and subsequently are evaluated against the routing-related configuration of the DA. At minimum, AVPs specifying the target node, i.e., the Destination-Host AVP, and / or the realm to which the message is to be routed, i.e., the Destination-Realm, are used in order to decide which direct communication peers or group of direct communication peers could be used to send the request message on as a next hop to forward the message towards the at least one target node (routing decision). In more sophisticated routing scenarios, application specific AVPs such as, e.g., the mobile identity of the subscriber associated with this message, can be used in order to take a routing decision.

For a Diamater request message, typically the Destination Realm is mandatory and the Destination Host is optional. Where the Destination Host is present, the request message needs to be routed to the specific host identified by the Destination Host. Where the Destination Host is absent, then the originator of the request message does not know or does need to know which specific server should handle processing of the request message: It is possible that a single server is appropriate for handling a particular request message including the Destination Realm only. In other cases, any server out of a set may be capable of handling the request: a DA that belongs to the destination realm will send the request to the correct server, or may even randomly pick one out of the available ones. In all cases, typically the request will be handled eventually by a single server, and it is not expected that multiple servers will get/handle the request.

As can be seen, generally, the routing decision taken by a node can depend on a number of decision criterions including, but not limited to: a predefined routing table, a subscriber associated with the message to be routed, an identity of the at least one target node of the message to be routed, etc. Typically, the decision criteria on which the routing decision is based is referred to as routing rule.

Typically, DAs in a network are not aware of the full topology of the network; rather they typically possess a localized view only, covering the peers they are directly connected to via a link of the network, i.e., where no intermediate forwarding nodes participate in the transmission of a message (direct communication peers). Such information may be specified in the routing table. Due to the above, it is possible that a request message is forwarded to an interim DA only to discover that further upstream, i.e., in a direction from the forwarding node towards the target node, there is no available routing path to the intended target node, e.g., due to a failure condition of the network: The inability to deliver a message due to a failure condition may stem from networking problems, e.g. links are down, or node unavailability, e.g. final destination / interim DA is down.

Where a failure condition prevents successful delivery of the request message to the at least one target node, the node that cannot forward the request message any further sends an answer message with the appropriate result code, e.g., according to the Diameter protocol usually DIAMETER_UNABLE_TO_DELIVER. Generally, the node that creates the answer message may be referred to as the originator node of the answer message. Typically, the originator node of the answer message includes a value indicative of its identity in the answer message; e.g., according to the Diameter protocol, the originator node includes the origin-host AVP which indicates its identity.

This answer message typically follows the routing path of the message that couldn't be delivered, but in the opposite direction. Nodes that receive this answer have two options: either forward the answer message backwards along the routing path, i.e., towards the originator node of the request message; or try to reroute the message by sending it to a different direct communication peer than in the first transmission attempt such that the message can take a different routing path. Such a scenario may be referred to as rerouting attempt.

When rerouting attempts are employed in networks having multi-path topology, it is possible that the same nodes are offered the same message multiple times. However, as the failure condition may be persistent over the time of the rerouting attempts, it is possible that there is no gain from retrying transmission via a given node or partially overlapping routing paths.

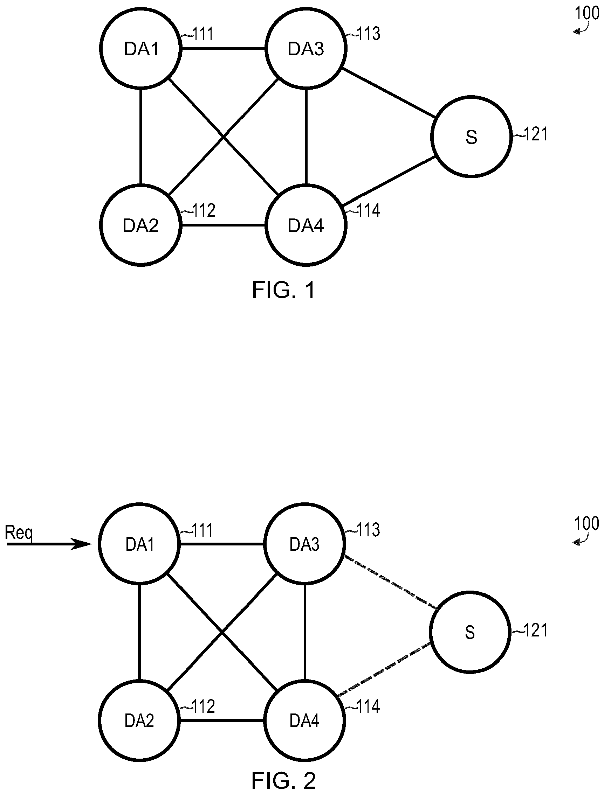

This finding is discussed in detail with respect to the following FIGs. In FIG. 1, a multi-path network 100 operating according to the Diameter protocol and having a redundant network topology is illustrated. The network 100 comprises four nodes/DAs 111 - 114 (labeled DA1, DA2, DA3, and DA4 in FIG. 1) and a server 121 (labeled S in FIG. 1). The edges of FIG. 1 correspond to Diameter connections between direct communication peers, i.e., to the links of the network. It is possible to forward or relay messages along these links.

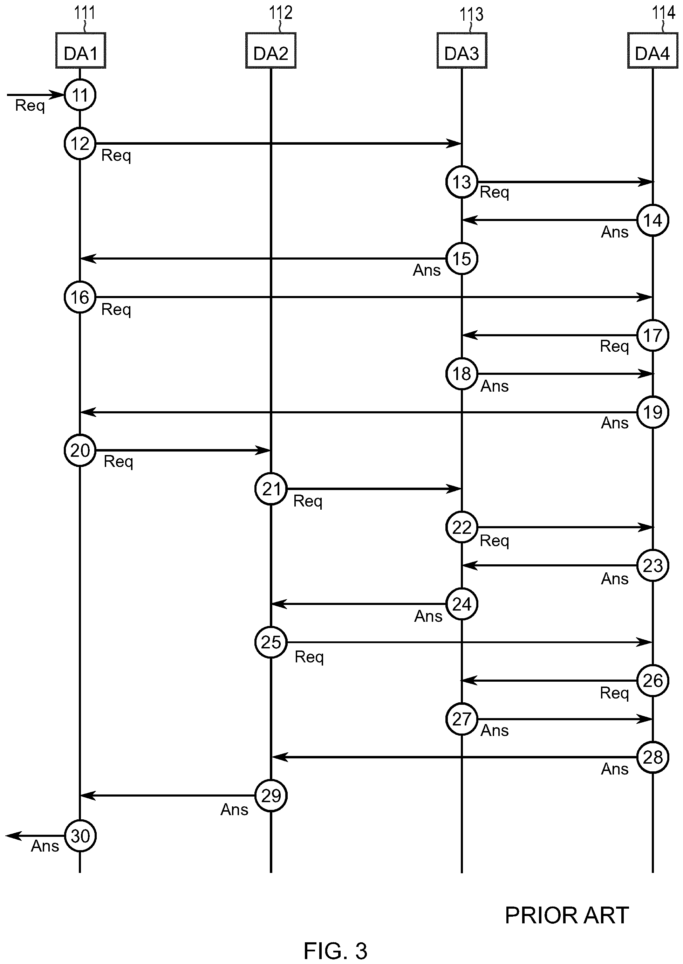

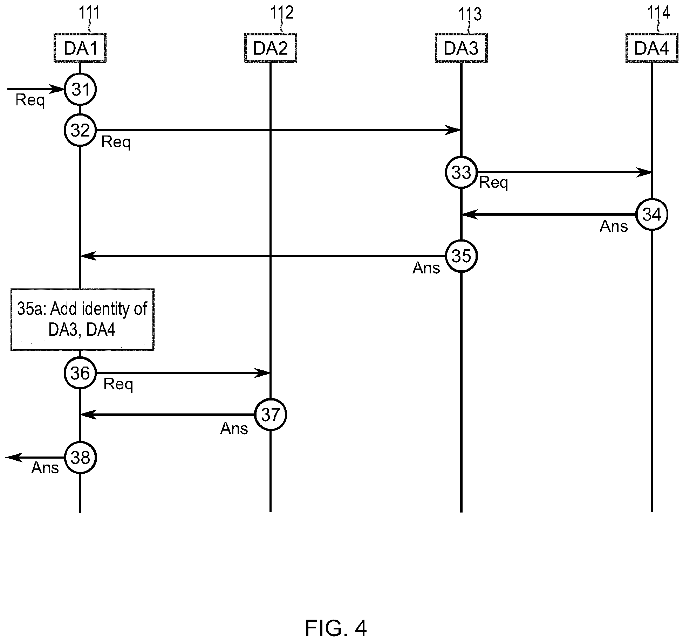

The routing decision taken by one of the DAs 111 - 114 for routing a request message directed towards server 121 can be based on the routing rules as explained below (these routing rules will be referred to with respect to the discussion of the signaling diagrams of FIGs. 3 and 4 further below).

ROUTING RULE FOR DA1: DA1 111 is configured to forward the request message to either DA3 113 or DA4 114, possibly in load sharing mode to distribute signaling load between DA3 113 and DA 114. If neither DA3 113, nor DA4 114 is eligible as next hop direct communication peer, the cross-link is employed towards DA2 112 as a backup.

ROUTING RULE FOR DA2: DA2 112 is configured to forward the request message either to DA3 113 or DA4 114, possibly in load sharing mode to distribute signaling load between DAs DA3 113 and DA4 114. If neither DA3 113, nor DA4 114 is eligible as next hop direct communication peer, the cross-link is employed towards DA1 111 as a backup.

ROUTING RULE FOR DA3: DA3 113 is configured to forward the request message to the server 121 directly. In case a failure condition exists and the connection to server 121 is not available, the cross-link is employed towards DA4 114 as a backup.

ROUTING RULE FOR DA4: DA4 114 is configured to forward the request message to the server 121 directly. In case a failure condition exists and the connection to server 121 is not available, the cross-link is employed towards DA3 113 as a backup.

It is possible that such routing rules are supplemented by a so-called loop avoidance mechanism: E.g., in order to avoid the formation of routing loops, when taking a routing decision, the corresponding node can take into account identities of further nodes having previously forwarded the request message; e.g., these identities of the further nodes may be indicated in the so-called route record AVP. Reference is made to the IETF RFC 6733, section 6.1.7., Predictive Loop Avoidance, where such a loop avoidance mechanism is explained for the Diameter protocol. As can be seen, in the context of the Diameter loop avoidance mechanism, the trigger criterion to add a value indicative of an identity of a node to the route record is receiving request message from a direct communication peer and forwarding the request message.

Now turning to FIG. 2, the network 100 of FIG. 1 in the presence of a failure condition is shown. Here, a scenario is illustrated where the server 121 cannot be reached and a request message directed towards or destined to the server 121 arrives at DA1 111. In such a case, the connections between the server 121 and the two nodes DA3 113 and DA4 114 are down and due to this failure condition the request message cannot be successfully delivered to the server 121. Because the DAs 111 - 114 are not aware of the topology of the network 100, multiple vain rerouting attempts are undertaken by implementing the routing rules as explained above. The corresponding signaling diagram implementing the above-mentioned routing rules is shown in FIG. 3.

DA1 111 receives a request message that is directed towards the server 121 (11). The request message is forwarded to DA3 113 (12) based on the corresponding routing decision taken in view of the above-mentioned routing rules. Due to the failure condition (cf. FIG. 2), DA3 113 cannot forward the request message to the server 121; hoping that DA4 114 has an active connection towards the server 121, based on the routing rules as explained above, DA3 113 uses the backup route and forwards the request message to DA4 114 (13). DA4 114 cannot forward the request message to the server 121 and also cannot use its backup route since that would create a loop as indicated by the loop avoidance mechanism. Thus no route can be found and an answer message with Result Code DIAMETER_UNABLE_TO_DELIVER is created by DA4 and sent backwards towards DA3 113 (14). Thus, DA4 is the originator node of the answer message. DA3 113 receives the answer message, but there is no alternative routing path DA3 113 can try. DA3 thus forwards the answer message back to DA1 111 (15). As can be seen, the answer message takes the routing path of the original request message, but in opposite direction. Thus, an egress node used by DA1 111 to send the request message at 12, i.e., in the scenario of FIG. 3 DA3 113, corresponds to an ingress node at which DA1 111 receives the corresponding answer message at 15, i.e., in the scenario of FIG. 3 also DA3 113. Generally, the ingress node may be the direct communication peer from which a given message is received. DA1 111 receives the answer message with Result Code DIAMETER_UNABLE_TO_DELIVER from DA3 113 and tries the alternate routing path by sending the request message to DA4 114 (16). DA4 114 cannot forward directly to the server 121 due to the failure condition; hoping that DA3 113 has an active connection to the server 121, based on the routing rules, DA4 114 uses the backup routing path and forwards the request message to DA3 113 (17). DA3 113 cannot forward directly to the server 121 and also cannot use the backup routing path since that would create a loop as indicated by the loop avoidance mechanism. Thus, no routing path to the server 121 can be found by DA3 113 and an answer message with Result Code DIAMETER_UNABLE_TO_DELIVER is created by DA3 113 and sent backwards towards DA4 114 (18). Thus, DA3 113 is the originator node of the answer message. DA4 114 receives the answer message, but there is no alternative routing path DA4 114 could try. DA4 114 forwards the answer message back to DA1 111 (19). Neither DA3 113 nor DA4 114 could deliver the request message. For this reason, DA1 111 uses the backup routing path towards DA2 112 (20). DA2 112 will take the same actions as DA1 111 did before, due to the persistent failure condition attempting to deliver the request message via DA3 113 and DA4 114; eventually DA2 112 responds to DA1 111 with an answer message containing the Result Code DIAMETER_UNABLE_TO_DELIVER (21 - 29). At this point, DA1 111 is out of possible routing paths towards the server 121 and thus forwards the answer message created by DA4 114 at 28 backwards to the direct communication peer (not shown in FIG. 3) that provided the original request message at 11 (30).

From the above, it is evident that the nodes DA3 113 and DA4 114 are asked multiple times, specifically four times, to process and forward the same request message - even though there is no gain from such a repetition: The rerouting attempts on the alternate routing paths happen within a short time duration and thus the probability of the failure condition having resolved is small. Hereinafter, techniques are explained which allow to avoid such vain rerouting attempts.

These techniques generally rely on adding one or more identities of nodes of the network to a routing record. The trigger criterion for adding the identities may be the receiving of the answer message; i.e., said adding may be in response to receiving the answer message. In particular, a value indicative of the identity of the originator node of the answer message may be added to the routing record of the message before forwarding the message along an alternative routing path if previous delivery of the message has been unsuccessful. Then, it is possible that the value indicative of the identity of a given node in the routing record prompts the further nodes to not send the message to the given node. In other words, presence of the identity of the given node in the routing record can indicate that the given node previously attempted to forward this message or another message towards the at least one target node and / or handle this message or another message in a certain way. Then, it may not be required to send the message again to the given node.

Such a technique of handling the routing record is compatible with the Predictive Loop Avoidance mechanism according to the IETF RFC 6733, section 6.1.7. The Predictive Loop Avoidance mechanism of the Diameter protocol is leveraged by the techniques mentioned herein in order to avoid visiting again nodes that have previously handled a request message. Specifically, the identities of previously visited nodes are added as route record AVPs in the Diameter request message to be rerouted. This way, the DA that does the re-routing, as well as those DAs that will later forward the request message, will steer away from already visited nodes. The Predictive Loop Avoidance mechanism is based on evaluating the route record AVPs carried within a request message in order to avoid offering a request message to a DA that has already forwarded the same request message before (loop). When a DA forwards a request message, according to the IETF RFC 6733 reference implementation, the DA adds the identity of the direct communication peer from which the request message is received (ingress peer) as a route record AVP. Consequently, the set of the route record AVPs used by the Predictive Loop Avoidance mechanism of the Diameter protocol IETF RFC 6733 provides the history of all forwarding nodes downstream that have handled this request. The Predictive Loop Avoidance mechanism makes use of this information in order to avoid the formation of a loop when a request message is to be forwarded. According to this Predictive Loop Avoidance mechanism, when a request message is routed , the set of identities carried within route record AVPs in the request message are compared against the identities of the candidate direct communication peers for the next hop obtained from routing rules. Candidate direct communication peers that appear in the route record AVPs are ignored, no longer being considered as eligible forwarding destinations.

According to various aspects, different trigger criterions for adding the identity of a node to the routing record within a message are provided if compared to reference implementations facilitating the Predictive Loop Avoidance mechanism. When a message has been forwarded to a direct communication peer and an answer message is received afterwards, the values indicative of the following identities may be added to the routing record in the message before it is rerouted / forwarded again and / or to the routing record of another message: First, a value indicative of the identity of the node that created the answer message, i.e., a value indicative of an identity of the originator node of the answer message. The identity of the originator node of the answer message may be retrieved, in the case of the Diameter protocol, from the Origin-Host AVP in the received answer message. Generally, the answer message may include an originator attribute having a value indicative of the identity of the originator node of the answer message. Second, the identity of the direct communication peer that forwarded and sent the answer message back to the given node which adds the identities. Hence, generally, it is possible that a value indicative of the identity of the ingress node from which the answer message is received is added to the routing record.

Generally, said adding may be based on the answer message. E.g., said adding may be triggered by said receiving of the answer message, i.e., said adding may be in response to said receiving of the answer message.

Typically, as mentioned above, the answer message is routed along the same routing path as the original request message, yet in opposite direction. Thus, third, it may be possible to add, to the routing record, a value indicative of the identity of the egress node to which the request message has been previously sent.

In case these techniques are applied as an enhancement of the Diameter protocol Predictive Lop Avoidance mechanism, it can be ensured that the DA that adds these additional route record AVPs, as well as all other upstream DAs that subsequently handle a rerouted request message, steer away from DAs that have handled this same request message before. Here, functionality and logic which is already implemented in reference implementations with respect to the Diameter protocol Predictive Loop Avoidance mechanism may be re-used.

Implementing such techniques of adding, to the routing record, the identity of the originator node of the answer message in the presence of a failure condition in the network is explained below. For illustrative purposes, this is done with respect to the specific failure condition of the network 100 of FIG. 2. Such an implementation leads to a signaling of the request message/answer message as illustrated by the signaling diagram of FIG. 4. As explained above, the connections between the server 121 and the two nodes DA3 113 and DA4 114 are unavailable due to the failure condition. Because of this, messages cannot be delivered to the server 121.

First, DA1 111 receives a request message that is directed towards / destined for server 121 (31). The request message is forwarded to DA3 113 (32). As relied upon by the Diameter protocol Predictive Loop Avoidance mechanism reference implementation, the route record AVPs in the forwarded request message contain the identities of all the downstream nodes from DA1 111, as may be expressed by "Route-Record = {downstream_nodes_DA1}" (in FIG. 4, the downstream nodes of DA1 111 are not shown). DA3 113 cannot forward the request message directly to the server 121 due to the failure condition; hoping that DA4 114 has an active connection towards the server 121, based on the routing rules as explained above, DA3 113 uses the backup route path and forwards the request message to DA4 (33). DA4 114 cannot forward the request message directly to the server 121 and also cannot use the backup routing path since that would create a loop as indicated by the loop avoidance mechanism. Thus, no routing path can be found towards the server 121 and an answer message with result code DIAMETER_UNABLE_TO_DELIVER is sent backwards towards DA3 113 (34). DA3 113 receives the answer message, but there is no alternative routing path DA3 113 could try. DA3 113 thus relays the answer message back to DA1 111 (35). DA1 111 receives the answer from DA3 113 and before DA1 111 offers the request for re-routing, DA1 111 appends (35a) in the request message route record AVP the identity of DA4 114, i.e., a value indicating the identity of DA4 114 is included in the route record - this is because DA4 created the answer message, i.e., is the originator node of the answer message, and is identified by the Origin-Host AVP of the answer message. In the scenario of FIG. 4, DA1 111 also appends in the request message route record AVP the identity of DA3 113, i.e., a value indicating the identity of DA3 113 is included in the route record AVP - this is because DA3 113 is the egress node of the request message sent by DA1 111 at 32 and because DA3 113 is the ingress node of the answer message received by DA1 111 at 35. The situation of the route record AVP after 35a may be expressed by "Route-Record = {downstream_nodes_DA1, DA3, DA4}".

According to the routing rules as explained above, the next routing choice of DA1 111 for request message would be to forward it to DA4 114 (cf. FIG. 3: 16). Since the identity of DA4 114 is already present in the route record AVP, this option is skipped. A vain rerouting attempt is skipped.

DA1 111 then employs its backup routing path towards DA2 112 according to the routing rules as explained above (36). DA2 112 can use neither DA3 113 nor DA4 114 to forward the received request message, since the route record AVP of the request message already include the corresponding identities and thus prompts DA2 112 to not send the request message to DA3 113 and DA4 114. DA2 112 cannot forward to DA1 111 either since this would lead to a loop as indicated by the loop avoidance mechanism. Thus, DA2 112 sends back an answer message with Result Code DIAMETER_UNABLE_TO_DELIVER to DA1 111 (37). DA1 111 is out of possible routing paths towards the server 111 and thus relays the answer message backwards to the direct communication peer that provided the original request (38).

The above shows that the addition of the identities of nodes having previously forwarded the request message before re-routing the message enhances the efficiency of routing within the network. For the scenario discussed above, this enhancement facilitates that each node receives a request message only once, compared to four times of the scenario according to reference implementations as previously discussed with respect to FIG. 3.

In the scenario above with respect to FIG. 4, the trigger criterion to add the identities of the nodes DA3 113 and DA4 114 to the route record AVP is the answer message including an attribute which corresponds to a predefined reference value, wherein the predefined reference value indicates a failed delivery of the request message to the at least one target node.

Generally, the trigger criterion to selectively add the value indicative of the identity of the originator node of the answer message to the routing record may be based on data extracted from the answer message. E.g., the attribute of the answer message that is checked when judging whether to add the value indicative of the identity of the originator node of the answer message to the routing record may correspond to the Diameter result code carried in the answer message. The DIAMETER_UNABLE_TO_DELIVER Result Code is the one that is usually employed when a Diameter message cannot be routed to its final destination, i.e., to the at least one target node. However, generally, the trigger criterion for selectively adding the value indicative of the identity of the originator node of the answer message to the routing record is not limited to the attribute of the answer message corresponding to a failed delivery of the message previously sent and directed to the at least one target node. Other scenarios and examples are conceivable for the trigger criterion.

One example of the trigger criterion is the value of the attribute of the answer message indicating a given congestion level of the at least one target node. E.g., if the congestion level of the at least one target node exceeds a predefined threshold, it may be possible to add, to the routing record, a value indicative of an identity of the originator node of the response message - which may be one or more of the at least one target nodes.

Another example of the trigger criterion is the value of the attribute of the answer message indicating the at least one target node providing or not providing a given application. E.g., by means of the request message it may be checked whether one or more of the at least one target node provide a specific application or service. E.g., the message may prompt whether the target node provides the specific application or server. E.g., if the at least one target node does not provide the specific application, it is possible to add, to the routing record, a value indicative of the identity of the at least one target node.

Another example of the trigger criterion is the value of the attribute of the answer message indicating a given command code of a command executed by the at least one target node. E.g., execution of the command may be prompted by the request message. Execution of the command may yield a specific result indicated by the command code. Depending on whether, e.g., according to predefined rules, the result is acceptable or not, it is possible that the identity of the originator node of the answer message - which may be the at least one target node - is selectively added to the routing record.

Thus, various trigger criterions for adding, e.g., the value indicative of the identity of the originator node of the answer message and / or the identity of the ingress node of the answer message are conceivable. The value indicative of the identity of the originator node may be added, e.g., to the routing record of the re-routed message. Here, in various scenarios the re-routing of a message may be triggered not only because another node cannot forward the request message, but also because the answer message includes an attribute corresponding to the predefined reference value - which may be flexibly chosen or set. In particular, the predefined reference value is not tied to a failure condition of the network.

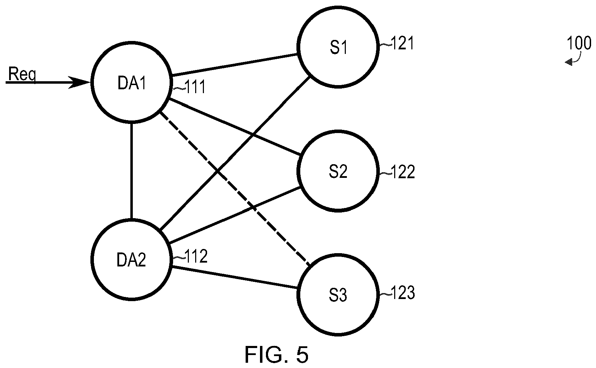

An example of such a scenario which is not tied to a failure condition of the network 100 is illustrated in FIG. 5. Here, the request message can be served by multiple servers 121 - 123 out of a pool, e.g., for load sharing purposes. A plurality of candidate target nodes 121 - 123 exists. If the congestion level of a given one of the servers 121 - 123 exceeds a threshold value, this server 121 - 123 creates and returns an answer message including an attribute having a value which indicates the increased congestion level; e.g., in case the Diameter protocol is employed, the value DIAMETER_TOO_BUSY can be used. In such cases, it is again beneficial to add the identity of previously tried congested servers 121 - 123 to the routing records when forwarding the request message to a different node 111, 112. This is explained in detail hereinafter.

In the scenario of FIG. 5, a request message arrives at DA1 111, which can be handled by any one of the servers S1 121, S2 122, S3 123. The link between DA1 111 and S3 123 is down (indicated in FIG. 5 by the dashed line). In this example, DA1 111 forwards the request message first to Server S1 121; here, the target node to which the request message is directed corresponds to the egress node to which the request message is sent. DA1 111 receives an answer message from the server S1 121 indicating congestion of the server S1 121, e.g.. having a result code attribute having a value equal to DIAMETER_TOO_BUSY. The request message is rerouted towards the server S2 122 as new target node and an answer message is received from the server S2 122, said answer message having an attribute having a value indicating congestion of the server S2 122. The server S3 123 is not directly reachable from DA1 111, so DA1 111 forwards request message to DA2 112, i.e., along its backup routing path.

To avoid DA2 112 sending the request message to the servers S1 121 and S2 122, DA1 111 adds to the routing record values indicative of the identities of the servers S1 121 and S2 122. This is done because the value of the attribute indicates the congestion. Thus, by employing the mechanism described above, the already tried servers S1 121 and S2 122 are included in the routing record in the request message forwarded to DA2 112. Thus DA2 112 will skip servers S1 121 and S2 122 and directly send the request message to the server S3 123.

In FIG. 5, the example is provided with respect to the congestion levels of the servers S1, S3, S3 121 - 123. A similar example is conceivable where the request message prompts whether servers S1, S3, S3 121 - 123 provide a specific application. Here, servers S1, S2 121, 122 could respond by means of the answer message that the specific application is not provided. Then, before forwarding the request message to DA2 112, DA1 111 could also add the values indicative of the identities of the servers S1 121, S2 122 to the request message: Thus DA2 112 will skip servers S1 121 and S2 122 and directly send the request message to the server S3 123.

As will be appreciated from the above, generally said selectively adding of the values indicative of the identities of nodes is configurable based on the attribute of the answer message corresponding to a predefined reference value. Beyond the examples given above, the attribute may indicate a state of the originator of the answer message. Specific attributes of the answer message that can be taken as a decision criterion when implementing the techniques described herein in the Diameter protocol are: application ID; command code; AVP content such as result code contents, and a logical combination thereof.

As can be seen from the above, by flexibly setting the decision criterion for selectively adding to the routing record values indicative of identities of originators of answer messages and / or of the ingress node of the answer message, various use cases can benefit from the advanced routing techniques.

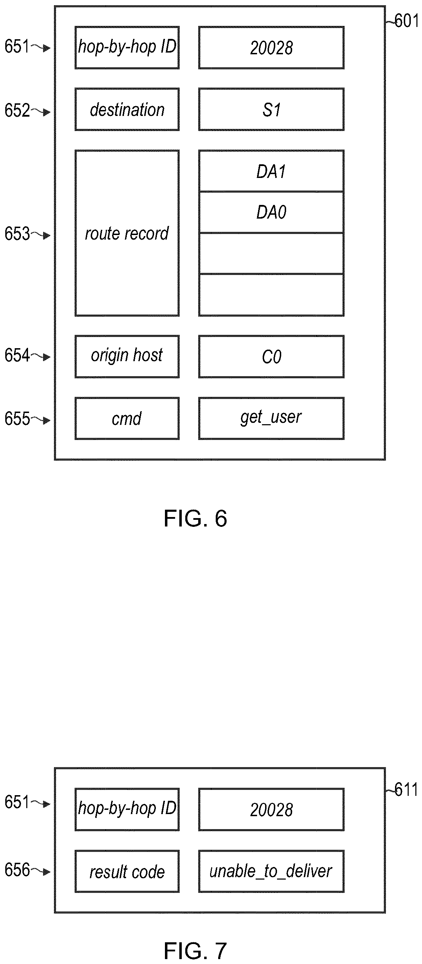

In FIG. 6, a message 601 is illustrated; the message 601 prompts for certain information and / or for execution of a certain command. Thus, the message 601 may be referred to as request message. In FIG. 6, for illustrative purposes, a request message according to the Diameter protocol is discussed; however, similar techniques may be readily applied to other kinds and types of messages.

The request message 601 includes a number of attributes 651 - 655, wherein each attribute carries a specific value or a plurality of values (AVP).

A value of the context attribute 651 indicates the context to which the request message 601 belongs; in case the request message 601 is implemented based on the Diameter protocol, the context attribute 651 may be the so-called hop-by-hop ID. The hop-by-hop ID is used for matching request messages with answer messages and is connection signification. At each forwarding, the value of the hop-by-hop ID is replaced with a value selected by the respective forwarding node. As the answer message travels backwards, the value of the hop-by-hop ID is replaced accordingly so that for each connection the value of this field in the answer is equal to the one used for the request (over this specific link). The context attribute 651, when implemented based on the Diameter protocol, may alternatively or additionally relate to the so-called End-to-End ID. The End-to-End ID is used to detect duplicate messages. The End-to-End ID is set by the originator of the request message and is unique since thisEnd-to-End ID together with the Origin-Host is used to discriminate possible retransmissions due to connection faults as detected, e.g., by an Automatic Repeat Request protocol. DAs handling a message are not allowed to change the value of the End-to-End ID. Alternatively or additionally, the context attribute 651, when implemented based on the Diameter protocol, may relate to the so-called Session-ID. All messages pertaining to a specific session have the same value within the Session-Id AVP. This value is unique in both space and time. A session is typically established between a given client and a given server as originator node and target node. Thus, as will be appreciated from the above, the context attribute 651 may be specific to a session or transmission procedure between one or more originator nodes of the request message 601 and one or more target nodes of the request message 601.

The value of a target attribute 652 indicates the at least one target node, e.g., by specifying an identity of the at least one target node. In case the request message 601 is implemented based on the Diameter protocol, the target attribute 652 may be the so-called Destination Realm AVP or Destination Host AVP.

A value of a routing record attribute 653 indicates identities of upstream nodes that have previously forwarded the request message 601; the routing record attribute 653 when implemented according to the Diameter protocol may also be referred to as route record AVP and may be relied upon by the Diameter protocol Predictive Loop Avoidance mechanism.

A value of an originator attribute 654 indicates an identity of an originator node of the request message 601; in case the request message 601 is implemented based on the Diameter protocol, the originator attribute 654 may be the so-called origin-host attribute.

A value of a command code attribute 655 indicates a command to be executed by the at least one target node; in case the request message 601 is implemented based on the Diameter protocol, the command code attribute 655 may be the so-called command code. The request message 601 thus prompts execution of the command.

In FIG. 7, the answer message 611 received after said sending of the request message 601 is illustrated - again for illustrative purposes with respect to the Diameter protocol. Also the answer message 611 includes the context attribute 651 which, in the scenario of FIG. 7, has the same value as the context attribute 651 of the request message 601. Thus, in the scenario of FIGs. 6 and 7, the answer message 611 includes a context attribute 651 having a value indicative of the request message 601. The context attribute 651 is used for routing the answer message 611.

Additionally, the answer message 611 includes a result code 656 which, e.g., indicates a result of the delivery attempt of the request message 601. Alternatively or additionally, it would also be possible that the result code 656 indicates a result of the command executed by the target node, execution of which is prompted by the command code attribute 655 included in the request message 601. The result code 656 could, alternatively or additionally also indicate a load level of the target node, e.g., if the load level exceeds a predefined threshold..

It is possible that the request message 601 and the answer message 611 include additional attributes beyond those named above, e.g., an Application ID.

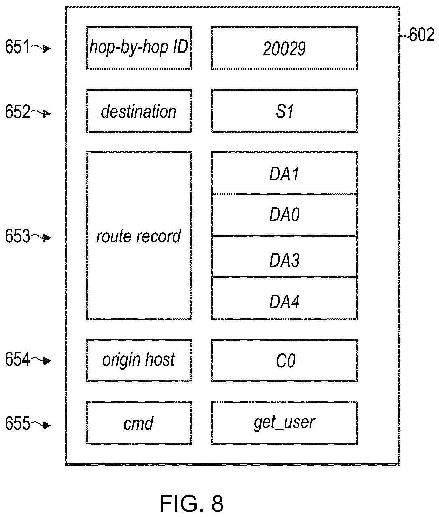

In FIG. 8, the request message 602 is shown where additional venues indicating identities of nodes have been added to the routing record 653 in response to receiving the answer message 611 and employing techniques as discussed above. As can be seen from a comparison of FIGs. 6 and 8, the request message 602 corresponds to the request message 601, i.e., the attributes 652, 654, and 655 are the same. Generally, it can be assumed that two request messages 601, 602 correspond to each other when the target attributes 652 indicate the same at least one target node and / or when the originator attributes 654 indicate the same originator node and / or when the command code attributes 655 indicate the same or corresponding commands and / or when the context attributes 651 indicate the same context or corresponding contexts, e.g., in case the Diameter Protocol is implemented the Session ID AVP.

E.g., if the trigger criterion for adding values indicative of the identity of the originator node of the answer message 611 to the routing record 653 is met, the value indicative of the identity of the originator node of the answer message may be included in subsequent messages having the same target attribute 652, i.e., Destination Host and / or Destination Realm AVP, and / or the same Application ID. E.g., with respect to FIGs. 3 and 4, scenarios have been discussed where the identity of nodes is added to the routing record of corresponding request messages. Thereby, vain rerouting attempts of one and the same request message may be avoided. Generally, it may also be possible that corresponding techniques of adding, to the routing record, values indicative of identities of nodes are executed preemptively for further request messages for which no vain rerouting attempts have been undertaken. E.g., it may be possible to add, to the routing record of a further request message, a value indicative of the identity of the originator node of the answer message if the further request message has at least one attribute having a value corresponding to the value of the at least one attribute of the initial message for which vain rerouting attempts have been undertaken.

E.g., considering the scenario of FIG. 5, further request message is received by DA1 111 sometime after delivery of the initial request message. E.g., the further request message may have the same target attribute 652 as the initial request message - but, e.g., a different command code attribute 655. Then, optionally DA1 111 also adds a value indicative of the servers 121, 122 to the routing record of the further request message.

Generally, the routing record of second message(s) may be modified based on the identity of the originator node of the answer message, the second message(s) not corresponding to the initial message that triggered the answer message. E.g., in a simple scenario, the routing record of all second message(s) forwarded by a given node may be modified accordingly, e.g., for a certain time duration; this may be independent of the content of the second message(s).

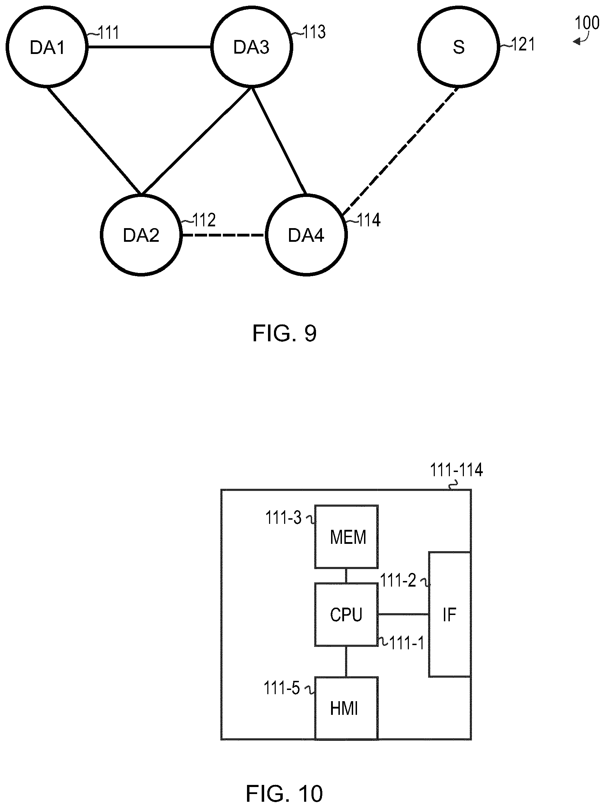

Above, scenarios have been discussed where based on the answer message 611 values indicative of the identity of the originator node of the answer message 611 and optionally of the ingress node from which the answer message 611 is received are added to the routing record 653 of the request message 601, 602. It is also possible to add values indicative of further identities to the routing record 653 of the request message 601, 602. This is illustrated with respect to FIG. 9. Here, the request message 601 is received by DA1 111 and forwarded along the routing path including DA2 112, DA3 113, DA4 114 towards the server 121. However, due to the unavailability of the link between DA4 114 and the server 121, DA4 114 is unable to deliver the request message 601. Because of this, DA4 114 creates the answer message 611 which is forwarded along the routing path in opposite direction. In such a scenario it is possible that DA1 111 also includes a value indicative of the identity of DA3 113 in the routing record 653. DA3 is neither the egress node of the message sent by DA1 111, nor the ingress node of the answer message received by DA1 111. DA3 113 is a forwarding node having forwarded the answer message 611 from the originator node 114 towards DA1 111. To implement such a scenario, the answer message 611 may include a routing record 653 to which values indicative of identities of peer communication nodes from which the answer message 611 is received are added - e.g., as explained above with respect to the Diameter protocol Predictive Loop Avoidance mechanism.

FIG. 10 is a schematic illustration of a node 111 - 114 that can be configured to implement techniques as explained herein. E.g., the node 111 - 114 can be configured to operate according to the Diameter protocol; then, the node 111 - 114 may be referred to as a DA. The node 111 - 114 comprises a processor 111-1, an interface 111-2, a non-volatile memory 111-3, and a human machine interface (HMI) 111-5. The processor 111-1 may be a multicore processor; shared computing may be employed. The interface 111-2 may be configured to receive messages from direct communication peers of the network 100. The interface 111-2 may be further configured to send messages to the direct communication peers of the network 100. Via the HMI 111-5, output may be provided to a user and input may be received from the user. This may allow to configure operation parameters of the node 111 - 114. Program code may be stored on the memory 111-3 which, when executed by the processor 111-1, causes the processor 111-1 to execute techniques as explained herein. In particular, execution of the program code may cause the processor 111-1 to add, to the routing record 653 of a message 601, 602, a value indicative of the identity of an node of a corresponding answer message. In this context, the processor 111-1 may be configured to check whether one or more trigger criteria for adding the value to the routing record are fulfilled. In a simple scenario, the trigger criterion is receiving the answer message. In more complex scenarios, the trigger criterion may correspond to a value of an attribute of the answer message corresponding to a predefined reference value. The trigger criterion may include monitoring a timeout timer; the timeout timer may be initialized by the answer message.

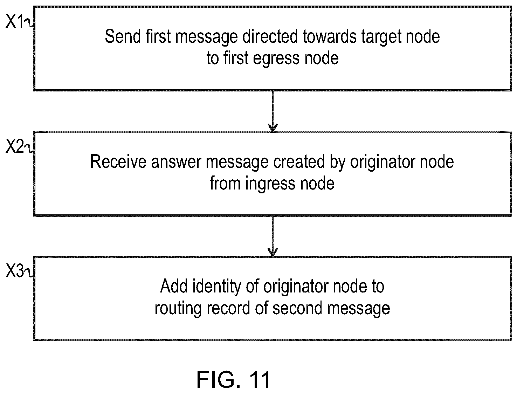

In particular, execution of the program code may cause the processor 111-1 to execute a method as illustrated by the flowchart of FIG. 11. At X1, the first message 601 is sent to the first egress node; the first message 601 is directed to at least one target node. E.g., first egress node may be identified as part of a routing decision taken by the processor 111-1 based on routing rules.

Sometime later, the answer message 611 is received via an ingress node at X2; typically, the ingress node corresponds to the first egress node of X1. The answer message 611 is created by an originator node; e.g., the originator node can be the at least one target node to which the first message 601 has been directed - however, it is also possible that the originator node of the answer message 611 is different to the target node to which the first message 602 has been directed. The latter scenario may in particular apply where the originator node of the answer message 611 has been unable to deliver the first message 601 to the target node.

At X3, the identity of the originator node of the answer message 611 is added to the routing record of a second message 602. E.g., X3 may be executed in response to receiving the answer message 611. Alternatively or additionally, it is possible that X3 is executed in response to receiving the second message 611. At X3, beyond the identity of the originator node, values indicative of further identities may be added to the routing record of the second message 602, e.g., indicative of the identity of the ingress node from which the answer message is received and / or indicative of the identity of the egress node to which the first message 601 is sent and / or indicative of at least one forwarding node having forwarded the answer message 611.

Generally, it is possible that the second message 602 does not correspond to the first message 601; e.g., it would be possible that a value of a command code attribute 655 differs between the first message 601 and the second message 602 and / or that a value of the context attribute 651 differs between the first message 601 and the second message 602. It is also possible that the first message 601 corresponds to the second message 602; e.g., a value of the command code attribute 655 can be the same for the first message 601 and the second message 602 and additionally further attributes such as a value of a context attribute 651 may also be the same for the first message 601 and the second message 602. E.g., the context attribute 651 may be at least partially the same for the first and second messages 601, 602: E.g., in an implementation relying on the Diameter protocol, the first message 601 and the second message 602 may correspond to each other where at least the End-to-End ID is the same. Alternatively or additionally, the target attribute 652 may be at least partially the same for the first and second messages 601, 602: E.g., in an implementation relying on the Diameter protocol, the first message 601 and the second message 602 may correspond to each other where at least the Destination AVP 652 is the same.

Generally, it is possible that the trigger criterion for adding the value indicative of the identity of the originator node to the routing record of the second message 602 is said receiving of the answer message 611 at X2. Alternatively or additionally, more complex trigger criteria can be checked during X3. E.g., it may be checked whether the answer message 611 indicates a certain congestion level of the originator node, indicates a certain application ID, indicates a certain command code, and/or indicates a certain AVP content.

Further, as part of X3 it may be checked whether a timeout timer has been lapsed; this may be in particular the case where the first message 601 does not correspond to the second message 602. Such checking is explained in detail hereinafter. Sometimes, a considerable time period may have lapsed between first and second attempts of transmission of the message and/or between transmission of the first message 601 and transmission of the second message 602. The longer the time period between attempts of transmission of the message(s), the higher the likelihood that a given failure condition is resolved. In order to take into account that the failure condition may resolve over the course of time, it is possible to take into account whether a timer has lapsed. E.g., a timer value may be compared against a predefined reference threshold. Generally, a time of initialization of the time may vary. In one scenario, the timer may be initialized when sending the first message 601. E.g., if the time between sending of the first message 601 at X1 and the time of execution of X3 is shorter (longer) than the predefined threshold, the value indicative of the identity of the originator node may be added (not added) to the routing record of the second message 602. In a further scenario, the timer may be initialized when receiving the answer message 611. E.g., if the time between receiving the answer message 611 at X2 and the time of execution of X3 is shorter (longer) than the predefined threshold, the value indicative of the identity of the originator node may be added (not added) to the routing record of the second message 602. In still further scenarios, other times of initializing the timer are possible, e.g., a point in time where a specific message 601, 602, 611 is processed by a node.

By such techniques it becomes possible to take into account that over the course of time a failure condition may resolve and the network may recover. E.g., over the course of time, a congestion level of a previously unavailable node may decrease such that the node becomes available again. In various implementations, the timer is handled by the forwarding node; thus, the bookkeeping may be implemented in a DA where the Diameter protocol is implemented. In further implementations, it is possible that together with said adding of the value indicative of the identity of a node having unsuccessfully tried to deliver the message towards the at least one target node, a timing value may be added to the routing record, the timing value indicating a time of the vain routing attempt. E.g., the timing value can be a timestamp indicating the time at which the node which adds to the routing record the value indicative of the identity of the forwarding node sends the first message or receives the answer message. Then, it is possible to compare the timing value against current time and a predefined threshold in order to decide whether to add or not the identity of the originator node of the answer message 611 to the routing record of the second message 602.

Summarizing, above techniques have been shown which enable to efficiently route messages in a multi-path network. The efficient routing may be in terms of avoiding routing paths which have a high likelihood of unsuccessful transmission or may be in terms of other criteria such as results of commands executed by nodes, etc.

In particular, techniques have been shown which enable to avoid rerouting attempts along at least partly overlapping routing paths. These techniques rely on adding, to a routing record, a value indicative of the originator of an answer message. Thus, identities of nodes are prospectively added to a message based on the experience with previous routing attempts.

Certain drawbacks of reference implementations such as increased signaling load due to multiple rerouting attempts, increased consumption of node resources, and increased response times may be mitigated.

Specifically, since the same messages are not rerouted multiple times over the same links of the network, the signaling load becomes lower. Consequently, disturbances in the topology of a network causing failure conditions such as, e.g., broken links or unavailable nodes including unavailable servers, do not bring a disproportionate impact on link capacity consumption. Forwarding nodes require no manual intervention in order to optimize their routing decisions. Similarly, since messages being forwarded visit interim upstream nodes fewer times, the resource consumption on these nodes - and, therefore, ultimately energy consumption - may be reduced.

Also, since fewer hops are needed in order to resolve whether a message can be delivered or not, the latency between the initial sending or creation of a message and the matching answer is reduced.

Further, since the above enhancement is based on leveraging Diameter protocol provided functionality, the backward and forward compatibility with reference implementations is ensured; this is achieved by reusing the influence that an identity of a previously visited node in the route record AVP has on a routing decision taken by a given node, regardless of the actual mechanism or decision logic that added the identity of the given node to the route record AVP.

Thus, techniques of routing in a multi-path network that allow to avoid unnecessary multiple delivery attempts during failure conditions have been illustrated. Techniques of smart routing have been illustrated, the techniques taking into account results of previous routing or routing attempts and / or a global network topology, e.g., during presence of a failure condition or during normal network operation.

Although the invention has been shown and described with respect to certain preferred embodiments, equivalents and modifications will occur to others skilled in the art upon reading and understanding the specification. The present invention comprises all such equivalents and modifications and is limited only by the scope of the appended claims.

E.g., while above various scenarios are discussed with respect to the Diameter protocol, various aspects of the application may be applied to other signalling protocols. E.g., while above various scenarios are discussed with respect to request messages, other kinds and types of messages may be employed.

## Claims

1. A method, comprising:
- a node (111-114) of a multi-path network (100) sending to a first egress node (111-114, 121-123) a first message (601) directed towards at least one target node (121-123),
- after said sending, the node (111-114) receiving an answer message (611) including an originator attribute (654) having a value indicative of an identity of an originator node (111-114, 121-123) of the answer message (611),
- adding, to a routing record (653) of a second message (602), the value indicative of the identity of the originator node (111-114, 121-123) of the answer message (611),
- the node (111-114) sending to a second egress node (111-114, 121-123) the second message (602) directed towards the at least one target node (121-123).

2. The method of claim 1,
wherein the answer message (611) is received from an ingress node (111-114, 121-123),
the method further comprising:
- adding, to the routing record (653) of the second message (602), a value indicative of the identity of the ingress node (111-114, 121-123).

3. The method of claims 1 or 2, further comprising:
- adding, to the routing record (653) of the second message (602), a value indicative of the identity of the first egress node (111- 114, 121-123).

4. The method of any one of the preceding claims,
wherein the answer message (611) includes a routing record (653) including a value indicative of an identity of at least one forwarding node (111-114) having forwarded the answer message (611) from the originator node (111-114, 121-123) of the answer message (611) towards the node (111-114),
the method further comprising:
- adding, to the routing record (653) of the second message (602), a value indicative of the identity of the at least one forwarding node (111-114).

5. The method of any one of the preceding claims, further comprising:
- checking if a value of an attribute (651-656) of the answer message (611) corresponds to a predefined reference value,
wherein said adding is selectively executed depending on said checking.

6. The method of claim 5,
wherein the predefined reference value indicates a failed delivery of the message to the at least one target node (121-123).

7. The method of claims 5 or 6,
wherein the predefined reference value indicates a given congestion level of the at least one target node (121-123).

8. The method of any one of claims 5 - 7,
wherein the predefined reference value indicates the at least one target node (121-123) not providing a given application.

9. The method of any one of claims 5 - 8,
wherein the predefined reference value indicates a given command code (656) of a command executed by the at least one target node (121-123).

10. The method of any one of the preceding claims,
wherein the second message (602) corresponds to the first message (601).

11. The method of any one of the preceding claims,
wherein the value indicative of the identity of a given node (111-114, 121-123) in the routing record (653) prompts further nodes (111-114) to not send the second message (602) to the given node (111-114, 121-123).

12. The method of any one of the preceding claims,
wherein the answer message (611) includes a context attribute (651) having a value indicative of the first message (601).

13. A node (111-114) attachable to a multi-path network (100), comprising:
- an interface (111-2) configured to communicate with a first egress node (111-114) and a second egress node (111-114),
- at least one processor (111-1) configured to send, via the interface (111-2) and to the first egress node (111-114, 121-123), a first message (601) directed towards at least one target node (111-114, 121-123),
wherein the at least one processor (111-1) is configured to receive, via the interface (111-2), an answer message (611) including an originator attribute (653) having a value indicative of an identity of an originator node (111-114, 121-123) of the answer message (611),
wherein the at least one processor (111-1) is further configured to add, to a routing record (653) of a second message (602), the value indicative of the identity of the originator node (111-114, 121-123) of the answer message (611),
wherein the at least one processor (111-1) is further configured to send, via the interface (111-2) to the second egress node (111-114, 121-123), the second message (602) directed towards the at least one target node (121-123).

14. The node (111-114) of claim 13, adapted to perform the method of any of claims 2 to 12.

15. A computer program product comprising program code to be executed by at least one processor (111-1) of a node (111-114) of a multi-path network (100),
wherein execution of the program code causes the at least one processor (111-1) to execute a method comprising:
- sending to a first egress node (111-114, 121-123) a first message (601) directed towards at least one target node (121-123),
- after said sending, receiving an answer message (611) including an originator attribute (654) having a value indicative of an identity of an originator node (111-114, 121-123) of the answer message (611),
- adding, to a routing record (653) of a second message (602), the value indicative of the identity of the originator node (111-114, 121-123) of the answer message (611),
- sending to a second egress node (111-114, 121-123) the second message (602) directed towards the at least one target node (121-123).

16. The computer program product of claim 15,
wherein execution of the program code causes the at least one processor (111-1) to execute the method of any one of claims 1 - 12.

## Patentansprüche

1. Verfahren, umfassend:
- Senden einer ersten Mitteilung (601), die an mindestens einen Zielknoten (121-123) gerichtet ist, von einem Knoten (111-114) eines Mehrwegnetzes (100) an einen ersten Ausgangsknoten (111-114, 121-123),
- Empfangen einer Antwortmitteilung (611), die ein Absenderattribut (654) mit einem Wert enthält, der eine Identität eines Absenderknotens (111-114, 121-123) der Antwortmitteilung (611) angibt, am Knoten (111-114) nach dem Senden,
- Hinzufügen des Werts, der die Identität des Absenderknotens (111-114, 121-123) der Antwortmitteilung (611) angibt, zu einem Routing-Eintrag (653) einer zweiten Mitteilung (602),
- Senden der zweiten Mitteilung (602), die an den mindestens einen Zielknoten (121-123) gerichtet ist, vom Knoten (111-114) an einen zweiten Ausgangsknoten (111-114, 121-123).

2. Verfahren nach Anspruch 1,
wobei die Antwortmitteilung (611) von einem Eingangsknoten (111-114, 121-123) empfangen wird,
wobei das Verfahren ferner umfasst:
- Hinzufügen eines Werts, der die Identität des Eingangsknotens (111-114, 121-123) angibt, zu dem Routing-Eintrag (653) der zweiten Mitteilung (602).

3. Verfahren nach Anspruch 1 oder 2, weiterhin umfassend:
- Hinzufügen eines Werts, der die Identität des ersten Ausgangsknotens (111-114, 121-123) angibt, zu dem Routing-Eintrag (653) der zweiten Mitteilung (602).

4. Verfahren nach einem der vorhergehenden Ansprüche,
wobei die Antwortmitteilung (611) einen Routing-Eintrag (653) mit einem Wert enthält, der eine Identität mindestens eines Weiterleitungsknotens (111-114) angibt, der die Antwortmitteilung (611) vom Absenderknoten (111-114, 121-123) der Antwortmitteilung (611) an den Knoten (111-114) weitergeleitet hat,
wobei das Verfahren ferner umfasst:
- Hinzufügen eines Werts, der die Identität des mindestens einen Weiterleitungsknotens (111-114) angibt, zu dem Routing-Eintrag (653) der zweiten Mitteilung (602).

5. Verfahren nach einem der vorhergehenden Ansprüche, ferner umfassend:
- Prüfen, ob ein Wert eines Attributs (651-656) der Antwortmitteilung (611) einem vorbestimmten Referenzwert entspricht,
wobei das Hinzufügen selektiv in Abhängigkeit vom Prüfen ausgeführt wird.

6. Verfahren nach Anspruch 5,
wobei der vorbestimmte Referenzwert eine fehlgeschlagene Zustellung der Mitteilung an dem mindestens einen Zielknoten (121-123) angibt.

7. Verfahren nach Anspruch 5 oder 6,
wobei der vorbestimmte Referenzwert ein bestimmtes Überlastungsniveau des mindestens einen Zielknotens (121-123) angibt.

8. Verfahren nach einem der Ansprüche 5-7,
wobei der vorbestimmte Referenzwert angibt, dass der mindestens eine Zielknoten (121-123) eine bestimmte Anwendung nicht bereitstellt.

9. Verfahren nach einem der Ansprüche 5-8,
wobei der vorbestimmte Referenzwert einen bestimmten Befehlscode (656) eines Befehls angibt, der von dem mindestens einen Zielknoten (121-123) ausgeführt wird.

10. Verfahren nach einem der vorhergehenden Ansprüche,
wobei die zweite Mitteilung (602) der ersten Mitteilung (601) entspricht.

11. Verfahren nach einem der vorhergehenden Ansprüche,
wobei der Wert, der die Identität eines bestimmten Knotens (111-114, 121-123) in dem Routing-Eintrag (653) angibt, weitere Knoten (111-114) auffordert, die zweite Mitteilung (602) nicht an den bestimmten Knoten (111-114, 121-123) zu senden.

12. Verfahren nach einem der vorhergehenden Ansprüche,
wobei die Antwortmitteilung (611) ein Kontextattribut (651) mit einem Wert enthält, der die erste Mitteilung (601) angibt.

13. Knoten (111-114), der mit einem Mehrwegnetz (100) verbindbar ist, umfassend:
- eine Schnittstelle (111-2), die zum Kommunizieren mit einem ersten Ausgangsknoten (111-114) und einem zweiten Ausgangsknoten (111-114) ausgelegt ist,
- mindestens einen Prozessor (111-1), der zum Senden einer ersten Mitteilung (601), die an mindestens einen Zielknoten (111-114, 121-123) gerichtet ist, über die Schnittstelle (111-2) und an den ersten Ausgangsknoten (111-114, 121-123) ausgelegt ist,
wobei der mindestens eine Prozessor (111-1) zum Empfangen einer Antwortmitteilung (611), die ein Absenderattribut (653) mit einem Wert enthält, der eine Identität eines Absenderknotens (111-114, 121-123) der Antwortmitteilung (611) angibt, über die Schnittstelle (111-2) ausgelegt ist,
wobei der mindestens eine Prozessor (111-1) weiterhin zum Hinzufügen des Werts, der die Identität des Absenderknotens (111-114, 121-123) der Antwortmitteilung (611) angibt, zu einem Routing-Eintrag (653) einer zweiten Mitteilung (602) ausgelegt ist,
wobei der mindestens eine Prozessor (111-1) weiterhin zum Senden der zweiten Mitteilung (602), die an den mindestens einen Zielknoten (121-123) gerichtet ist, über die Schnittstelle (111-2) an den zweiten Ausgangsknoten (111-114, 121-123) ausgelegt ist.

14. Knoten (111-114) nach Anspruch 13, der zum Durchführen des Verfahrens nach einem der Ansprüche 2 bis 12 beschaffen ist.

15. Computerprogrammprodukt, umfassend Programmcode, der von mindestens einem Prozessor (111-1) eines Knotens (111-114) eines Mehrwegnetzes (100) ausgeführt werden soll,
wobei die Ausführung des Programmcodes bewirkt, dass der mindestens eine Prozessor (111-1) ein Verfahren ausführt, umfassend:
- Senden einer ersten Mitteilung (601), die an mindestens einen Zielknoten (121-123) gerichtet ist, an einen ersten Ausgangsknoten (111-114, 121-123),
- Empfangen einer Antwortmitteilung (611), die ein Absenderattribut (654) mit einem Wert enthält, der eine Identität eines Absenderknotens (111-114, 121-123) der Antwortmitteilung (611) angibt, nach dem Senden,
- Hinzufügen des Werts, der die Identität des Absenderknotens (111-114, 121-123) der Antwortmitteilung (611) angibt, zu einem Routing-Eintrag (653) einer zweiten Mitteilung (602),
- Senden der zweiten Mitteilung (602), die an den mindestens einen Zielknoten (121-123) gerichtet ist, an einen zweiten Ausgangsknoten (111-114, 121-123).

16. Computerprogrammprodukt nach Anspruch 15,
wobei die Ausführung des Programmcodes bewirkt, dass der mindestens eine Prozessor (111-1) das Verfahren nach einem der Ansprüche 1-12 ausführt.

## Revendications

1. Procédé, comprenant :
- un noeud (111-114) d'un réseau à trajets multiples (100) envoyant à un premier noeud de sortie (111-114, 121-123) un premier message (601) dirigé vers au moins un noeud cible (121-123),
- après ledit envoi, le noeud (111-114) recevant un message de réponse (611) incluant un attribut d'origine (654) ayant une valeur indiquant une identité d'un noeud d'origine (111-114, 121-123) du message de réponse (611)
- l'ajout, à un enregistrement de routage (653) d'un second message (602), de la valeur indiquant l'identité du noeud d'origine (111-114, 121-123) du message de réponse (611),
- le noeud (111-114) envoyant à un second noeud de sortie (111-114, 121-123) le second message (602) dirigé vers l'au moins un noeud cible (121-123).

2. Procédé selon la revendication 1, dans lequel le message de réponse (611) est reçu à partir d'un noeud d'entrée (111-114, 121-123), le procédé comprenant en outre :
l'ajout, à l'enregistrement de routage (653) du second message (602), d'une valeur indiquant l'identité du noeud d'entrée (111-114, 121-143).

3. Procédé selon les revendications 1 ou 2, comprenant en outre :
- l'ajout, à l'enregistrement de routage (653) du second message (602), d'une valeur indiquant l'identité du premier noeud d'entrée (111-114, 121-123).

4. Procédé selon l'une quelconque des revendications précédentes, dans lequel le message de réponse (611) inclut un enregistrement de routage (653) incluant une valeur indiquant une identité d'au moins un noeud de transmission (111-114) ayant transmis le message de réponse (611) depuis le noeud d'origine (111-114, 121-123) du message de réponse (611) vers le noeud (111-114), le procédé comprenant en outre :
- l'ajout, à l'enregistrement de routage (653) du second message (602), d'une valeur indiquant l'identité de l'au moins un noeud de transmission (111-114).

5. Procédé selon l'une quelconque des revendications précédentes, comprenant en outre :
- le fait de vérifier si une valeur d'un attribut (651-656) du message de réponse (611) correspond à une valeur de référence prédéfinie,
dans lequel ledit ajout est exécuté sélectivement en fonction de ladite vérification.

6. Procédé selon la revendication 5,
dans lequel la valeur de référence prédéfinie indique un échec de distribution du message à l'au moins un noeud cible (121-123).

7. Procédé selon les revendications 5 ou 6,
dans lequel la valeur de référence prédéfinie indique un niveau de congestion donné de l'au moins un noeud cible (121-123).

8. Procédé selon l'une quelconque des revendications 5 à 7,
dans lequel la valeur de référence prédéfinie indique l'au moins un noeud cible (121-123) ne fournissant pas d'application donnée.

9. Procédé selon l'une quelconque des revendications 5 à 8,
dans lequel la valeur de référence prédéfinie indique un code de commande donné (656) d'une commande exécutée par l'au moins un noeud cible (121-123).

10. Procédé selon l'une quelconque des revendications précédentes,
dans lequel le second message (602) correspond au premier message (601).

11. Procédé selon l'une quelconque des revendications précédentes,
dans lequel la valeur indiquant l'identité d'un noeud donné (111-114, 121-123) dans l'enregistrement de routage (653) invite les autres noeuds (111-114) à ne pas envoyer le second message (602) au noeud donné (111-114, 121-123).

12. Procédé selon l'une quelconque des revendications précédentes,
dans lequel le message de réponse (611) inclut un attribut de contexte (651) ayant une valeur indiquant le premier message (601).

13. Noeud (111-114) pouvant être connecté à un réseau à trajets multiples (100), comprenant :
- une interface (111-2) configurée pour communiquer avec un premier noeud de sortie (111-114) et un second noeud de sortie (111-114),
- au moins un processeur (111-1) configuré pour envoyer, via l'interface (111-2) et au premier noeud de sortie (111-114, 121-123), un premier message (601) dirigé vers au moins un noeud cible (111-114, 121-123),
dans lequel l'au moins un processeur (111-1) est configuré pour recevoir, via l'interface (11-2), un message de réponse (611) incluant un attribut d'origine (653) ayant une valeur indiquant une identité d'un noeud d'origine (111-114, 121-123) du message de réponse (611),
dans lequel l'au moins un processeur (111-1) est en outre configuré pour ajouter, à un enregistrement de routage (653) d'un second message (602), la valeur indiquant l'identité du noeud d'origine (111-114, 121-123) du message de réponse (611),
dans lequel l'au moins un processeur (111-1) est en outre configuré pour envoyer, via l'interface (111-2) au second noeud de sortie (111-114, 121-123), le second message (602) dirigé vers l'au moins un noeud cible (121-123).

14. Noeud (111-114) selon la revendication 13, conçu pour mettre en oeuvre le procédé selon l'une quelconque des revendications 2 à 12.

15. Produit de programme informatique comprenant un code de programme à exécuter par au moins un processeur (111-1) d'un noeud (111-114) d'un réseau à trajets multiples (100),
dans lequel l'exécution du code de programme amène l'au moins un processeur (111-1) à exécuter un procédé comprenant :
- l'envoi à un premier noeud de sortie (111-114, 121-123) d'un premier message (601) dirigé vers au moins un noeud cible (121-123),
- après ledit envoi, la réception d'un message de réponse (611) incluant un attribut d'origine (654) ayant une valeur indiquant une identité d'un noeud d'origine (111-114, 121-123) du message de réponse (611),
- l'ajout, à un enregistrement de routage (653) d'un second message (602), de la valeur indiquant l'identité du noeud d'origine (111-114, 121-123) du message de réponse (611),
- l'envoi à un second noeud de sortie (111-114, 121-123) du second message (602) dirigé vers l'au moins un noeud cible (121-123).

16. Produit de programme informatique selon la revendication 15,
dans lequel l'exécution du code de programme amène l'au moins un processeur (111-1) à exécuter le procédé selon l'une quelconque des revendications 1 à 12.
